# EUROPEAN PATENT SPECIFICATION

(11) **EP 2 096 828 B1**
(45) Date of publication and mention of the grant of the patent: **22.08.2012**
(21) Application number: 08151937.3
(22) Date of filing: 26.02.2008
(51) Int. Cl.: H04L 29/06, H04W 12/08

(54) **Method and management unit for managing access to data on a personal network**
Verfahren und Verwaltungseinheit zur Verwaltung des Zugangs zu Daten in einem persönlichen Netzwerk
Procédé et unité de gestion pour gérer l'accès aux données dans un réseau personnel

(43) Date of publication of application: 02.09.2009
(73) Proprietor: Vodafone Holding GmbH, 40213 Düsseldorf (DE)
(72) Inventor: Nelissen, Hans, 6226, DG Maastricht (NL)
(74) Representative: Cullinane, Marietta Bettina

(56) References cited:
- WO-A-2007/077958
- US-A1- 2006 166 649
- US-A1- 2007 174 282

## Description

The present invention relates to a method and a managing unit for managing access to data on a personal network.

The Internet is mainly used for sharing information. Together with the enormous amount of available information in the Internet it will become increasingly difficult to easily and quickly retrieve the appropriate information. On the Internet the identity of the person accessing the server and potentially downloading data there from is generally of minor importance. In a personal networks in contrast, the identity of the user trying to access data may be of major importance.

Services are known, where users subscribe to in order to become member of a community. Information relating to the user, such as his name and e-mail address, will have to be provided by the user during the subscription and may be used in subsequent communication within the personal network or community. One drawback of this solution is that information on the identity of the user has to be entered manually and can be tampered with.

For a peer-to-peer connection in a mobile communication network KR100623194B1 suggests a method for data sharing between two mobile terminals. In this method a user of a mobile terminal will receive a permission inquiry to allow sharing of files. If the permission is granted, a mobile IP address for the mobile terminal is determined by a node of the communication network and is transmitted to the requesting mobile terminal. One drawback of this method is that file sharing can only be carried out between two mobile terminals. In addition, the user of the mobile terminal from which data is to be shared, will not obtain secure information on the user of the requesting terminal.

Furthermore US 2007/174282 A1 discloses an access control method, an access control apparatus and a computer product. In this method a client apparatus sends a request for receiving a service from a service apparatus. For unregistered users, the service apparatus acquires meta-information of the client apparatus in question and determines an approving apparatus based on the acquired meta-information and a request for approval is displayed on the approving apparatus. One drawback of this method is that it only relates to the monitoring of access of apparatuses to an existing network. The process only allows the approver to approve or deny access to a specific computer.

In US 2006/166649 A1 the access to directors information of directory assistance is described. In this method a requesting party calls a directory assistance platform and a request for release of the requested information is sent to the mobile subscriber whose information is being requested. Hence, this document only relates to an access to directory entries which are centrally stored at Directory Assistance. One drawback of this method is that it cannot be used for access Management for access to data on a personal network.

The problem underlying the present invention is thus to provide a solution to manage access to data in a personal network in a secure way.

The invention is based on the finding that this problem can be solved by utilizing a unique identifier and improving information provisioning to users.

According to a first aspect, the problem is solved by a method for managing access to data on a personal network, wherein an access request is received at a managing unit for the personal network from a requesting device of a requesting party. The method is characterized in that the access request includes information on the data to be accessed, the managing unit extracts the subscriber identification module number of the requesting device as identification information of the requesting party from the access request, generates an indication of the requesting party based on the extracted identification information and transmits a permission request including the indication of the requesting party to a mobile terminal associated to the owner of the data which is to be accessed.

The personal network is preferably a peer-to-peer network. The peer devices may be any electronic device which is capable of establishing a connection to a network unit of the communication network. In particular, the peer devices may be personal computers (PC), mobile phones etc. The peer-to-peer connection may also be established between peer devices of different nature. For example the peer-to-peer connection may be established between a mobile phone and a PC. The communication between the peer devices may use a communication network which may be a computer network, in particular the Internet. The communication network may, however, at least partially also comprise a telecommunication network, in particular a mobile or wireless communication network. The telecommunication network may be used as an access network for accessing the Internet. Alternatively, the telecommunication network may be the communication network over which the peer-to-peer connection is established. In the peer-to-peer network the peer devices are on the same hierarchical level. This means that each device on the network provides functionality and services for other devices, and utilizes the functionality and service provided by others. In an environment of this kind, each user can allow other users access to resources such as hard disks or other storage means. The members of the network provide mutual access to resources and hence a server is not provided in such networks. For such peer-to-peer networks the management unit may be provided in the communication network used for communication, e.g. the Internet or a mobile communication network.

Alternatively, the personal network may be a network established with a server. Such personal networks may be wired or wireless and may, for example, be the home network of a user. In this case, the management unit may be included in the server of the network.

The personal network may, however, also be a virtual private network VPN. These networks are set up using customer-specific logical subnets within a public dial-up network such as for example ISDN. A typical setup for a VPN is the IP VPN (Internet Protocol VPN), where the subnets are connected via an IP tunnel. A VPN thus provides a logical network for a closed user group. As the VPN always uses public transmission networks where public carriers provide network services, the management unit may in this case be included in entities of the public transmission network or of the public carrier network, which is used for set up of the private network. Preferably, the management unit can be provided within or can be connected to an identification and authentication unit of the VPN. The VPN may be realised by peer to peer communication.

The access to data on the personal network which is managed by the management unit may be the mere browsing of data available on a device within the personal network. Preferably, the access to data, however, includes retrieval, such as a downloading of data.

According to the present invention, data which may be accessed may be content such as music files or video files. The data may, however, also be other files such as documents or information data.

The access request for accessing data on the personal network will include information on the data to be accessed. The request may be a targeted request, where the requesting party specified the personal network and possibly even the device within the personal network at which the data to be accessed is stored. Alternatively, the access request may originate from an untargeted, general request, wherein a central unit identifies the personal network or device at which the requested data is available. In the later case, the access request will be transmitted to the personal network or device via the central unit.

In either case, the access request will include identification information of the requesting party. The identification information of the requesting party will preferably be included into the access request automatically. Thereby fraud can be avoided. The identification information will preferably be a unique identification, in particular the number of a subscriber identification module (SIM) of the requesting party. The identification information on the user may be information stored on a user token used in the requesting device. The information on the user may be indicated by a variable or parameter in the access request. One advantage of using the SIM number is that the SIM card may be inserted into requesting devices such as mobile phones and the information stored thereon which clearly identifies the requesting party will thus be available at the requesting device. With devices such as a PC the identification information may also be provided by a SIM-card. In this case the information stored on the SIM-card may be transmitted to the PC by insertion of the card into the PC or via wire or wireless connection of a reader for the card to the PC.

The access request may originate from within the personal network or may be received from outside of the personal network.

The extraction of the identification information from the access can be reading of information from predefined fields or labels within the request. However, also extraction during parsing of the access request or other processing of the request can be used.

The indication of the requesting party is preferably the name of the requesting party. Additionally, an address or location of the requesting party may be included in the indication.

The permission request which is generated by the management unit will include the indication of the requesting party, e.g. their name, and will preferably also include a specification of the data which is to be accessed.

By transmitting such a permission request to an owner of the data to be accessed on the personal network, the owner will be aware of the person trying to access his data. Hence, the decision to allow or deny access can be based on the person requesting access and possibly also on the data which is to be accessed. Thereby an increased level of security is provided while the owner of the network may decide on the granting of access permission on a case to case basis. While some data may be shared with a larger group of people, the owner of the personal network may for example decide to only share sensitive data with a limited number of people.

The owner of the data to be accessed is preferably the owner or registered user of the device where the data which is to be accessed is stored. Alternatively, the owner of the data may be the user who stored the data on the device. In the latter case, the device may be a server and the data thereon may be sorted by user.

By transmitting the permission request to the mobile terminal of the owner of the data, the owner will always be informed on access requests, even if they are currently not using the device where the data which is to be accessed is stored at.

The devices to be used with the inventive method can be PC's, PDA, servers or mobile terminals, in particular mobile phones. The requesting device is preferably a mobile terminal of the requesting party.

According to one embodiment, the managing unit upon receipt of a response to the permission request initiates provisioning of the requested access to the requesting device and/or initiates transmission of a notification to a mobile terminal which is linked to the extracted identification information. The provisioning of the requested access to the requesting device may be initiated by sending a confirmation signal to the device, where the requested data is stored. This confirmation will be sent if the owner of the data allows access to the data for the requesting party. The confirmation may result in the data to be accessible, i.e. visible, downloadable etc. for the requesting party. The confirmation may also result in the immediate download of the data to the requesting device.

If in contrast, the owner of the data denies access to the data for the requesting party, the management unit will transmit a message to the mobile terminal which is linked to the identification information which had been extracted from the original request. Preferably, the identification information is the SIM number of the mobile terminal of the requesting party. Therefore the management unit can easily and reliably transmit a message to the mobile terminal of the requesting party. The requesting party can thus be informed that the requested access to the data has been denied. As the message will be sent by the management unit, the identity of the owner of the data will not have to be disclosed to the requesting party.

Preferably, the indication of the requesting party, which is included in the permission request to the owner of the data, is determined based on the extracted identification information. The indication can be generated by the management unit or can be retrieved from data stored at the management unit or a data base. Where the identification information is the SIM number of the mobile terminal of the requesting party, the indication, such as the name of the requesting party may be retrieved from the database of the mobile communication network, in particular from a database of the provider of this network. This process ensures that the correct user will be indicated to the owner of the data as the requesting party.

According to a preferred embodiment, the managing unit determines the owner of the data. This determination can be performed based on information stored in the management unit and/or on the device where the data to be accessed is stored. For data stored on a server for example the user, who stored the data may be determined to be the owner of the data. Once the person who owns the data has been identified, the management unit may look-up or retrieve the SIM number or mobile terminal number of the owner in a respective database in order to reach the owner via his mobile terminal. By determining the owner of the data and correlating the owner to a SIM or MSISDN number, it will be possible to transmit the permission request to the mobile terminal of the owner. The likelihood of the owner of having his mobile terminal available is higher than the likelihood of the owner using the exact device from which data is to be downloaded or accessed in a different manner. Therefore it can be ensured that the owner will be informed on access requests promptly.

Preferably, the mobile terminal of the owner, where the permission request is being transmitted to, is different from the device where the data which is to be accessed is stored. By sending the permission request to a different device than the device actually storing the data, the level of security can be further increased. In addition, the flexibility of the inventive method is increase, as the management of access to data is not limited to the device where the data is actually stored at. Therefore the inventive method can reliably be used to manage a whole personal network.

According to a further aspect of the invention, the problem is solved by a management unit for managing the access to data on a personal network according to claim 7.

The generating unit is preferably connected to a database where the identification information is correlated to the name and other specifications of the requesting party. This database may be the database of the provider of a mobile communication network. In this case the identification information is preferably the SIM number of the requesting party, i.e. of the user of the requesting device. According to one embodiment, the connection of the management unit to the database is a remote communication connection. In this case, the management unit may for example be included in a device of a personal home network of a user. The management unit may then communicate with the data base where identification indications are linked to information of the respective user, such as their name.

By providing a communication interface at the management unit for communication with a mobile terminal, the communication unit can communicate with the owner of the data which is to be accessed and/or with the requesting party. Thereby an improved information distribution is provided which increases the level of security as well as the flexibility of managing access to data on a personal network.

According to a preferred embodiment, the management unit further comprises a determination unit for determining the owner of the data to which the access request relates. The determination unit preferably determines the owner by identification information such as a SIM number of a mobile terminal of the owner.

According to one embodiment, the management unit is part of a personal network. In this case the management unit may at least partially be implemented on a device belonging to the personal network. This device may be the device where data which may be accessed is stored or may be central processing unit of the personal network. Alternatively, the management unit is at least partially included in a connecting unit used for the connection between the requesting device and the personal network. In the later case, the management unit may for example be implemented or included on a server on the network of the provider of a mobile communication network. This embodiment is advantageous, since the server will have access to databases where the correlation of a SIM number and name of the subscriber is stored. In addition, it will be easy for the management unit to transmit messages, such as the permission request and/or the message on denial of permission to the mobile terminals of the owner and/or of the requesting party.

The units of the management unit may be realised as hardware and/or software. The units may also at least partially be combined.

The management unit is preferably designed, i.e. comprises means for being used in the inventive method.

Features and advantages which are described with reference to the inventive method also apply to the inventive management unit and vice versa.

The present invention will now be described in detail with reference to the attached figures, wherein:
Figure 1 shows a schematic view of a first embodiment of a set-up for the inventive method; and
Figure 2 shows a schematic view of a second embodiment of the set-up for the inventive method.

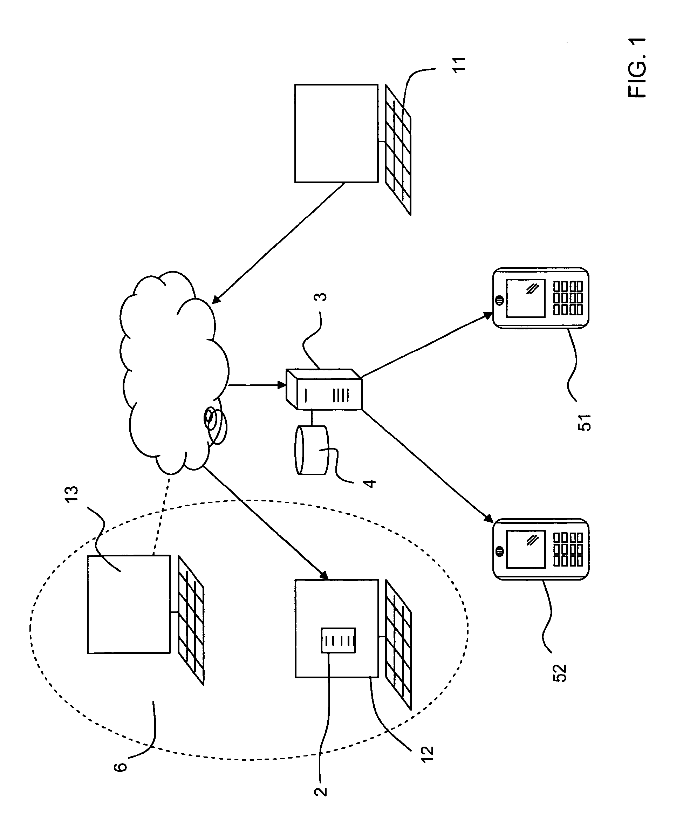

In Figure 1 a requesting peer device 11 is shown as laptop but could be any kind of peer device such as a PC, a mobile terminal etc. This peer device 11 can communicate with other peer devices 12, 13 via the Internet. The peer devices 12, 13 are part of a personal network 6. In the depicted set-up the personal network could be a VPN established via the Internet. The second peer device 12 is shown in Figure 1 to also be a laptop. Also this peer device could, however, be any other kind of peer device such as a PC or a mobile terminal. Data 2 is stored on the second peer device 12. The data 2 may be stored on storage means such as the hard drive of the computer or a database connected to the computer. Furthermore a management unit 3 is shown in Figure 1. This management unit 3 is connected to or can access a database 4, preferably the database of a mobile communication network carrier or provider. In this database 4 information relating to identification modules of subscribers to the mobile network, in particular SIM, is stored. This information comprises the SIM number as well as the name and possibly further information on the subscriber.

The managing unit 3 can communicate with mobile terminals 51, 52 of the mobile communication network, in particular mobile phones. This communication is preferably a data communication rather then a voice communication.

In a first use case it is assumed that User A is the user of peer device 11 and wishes to access data from the peer device 12 of a User B. Use A may for example wish to download data such as music. In order to access the data on the peer device 12 a respective access request is sent from peer device 11 of User A via the Internet. The access request of User A can be addressed to User B specifically. It is, however, also possible that this request is routed according to routing and filtering settings.

During transmission of the access request, the request is forwarded to the management unit 3. Upon receipt of the access request, the management unit 3 extracts identification information on the sender of the access request. This information may have been included in the request by the peer device 11 using information stored thereon. Upon extraction of the identification information, in particular the SIM number of a mobile terminal 51 of User A, the management unit 3 carries out a look-up in the database 4 of the mobile communication network. Thereby the name and other information such as the address of the sender of the request, i.e. the requesting party can be determined.

With this information available, the management unit 3 generates a permission request. The addressee of the permission request is the owner of the data which is to be accessed. In the present example the owner of the data is the User B. In order to transmit the permission request to User B, the management unit 3 may perform another look-up in data base 4 and determine the SIM number of the mobile terminal of User B. Alternatively, the SIM number of User B may be stored on the peer device 12 or in the management unit 3.

The thus generated permission request will then be sent to the mobile terminal 52 of User B. The request may include selection options for accepting and denying the request.

If User B grants permission for User A to access data on their personal network, this will be performed by sending a respective signal from mobile terminal 52 to the management unit 3. The response signal may be generated for example if User B selects and presses a "YES button" within the received permission request. Upon receipt of the permission, the management unit 3 will initiate the provisioning of the access. This may be carried out by sending a respective signal to peer device 12 of User B. If User B rejects the permission request, e.g. by pressing a "NO button" within the received permission request, the managing unit 3 will send a respective message to the mobile terminal 51 of User A.

Thereby, User A will be informed on any requests initiated from his peer device 11 but rejected by the other User B.

In addition, User B will be informed and will have the opportunity to accept or decline an access request for access to their personal network.

In the set-up shown in Figure 1 the requesting device 11 and the mobile terminal 51 of User A and the peer device 12 and mobile terminal 52 of User B, respectively, are different devices.

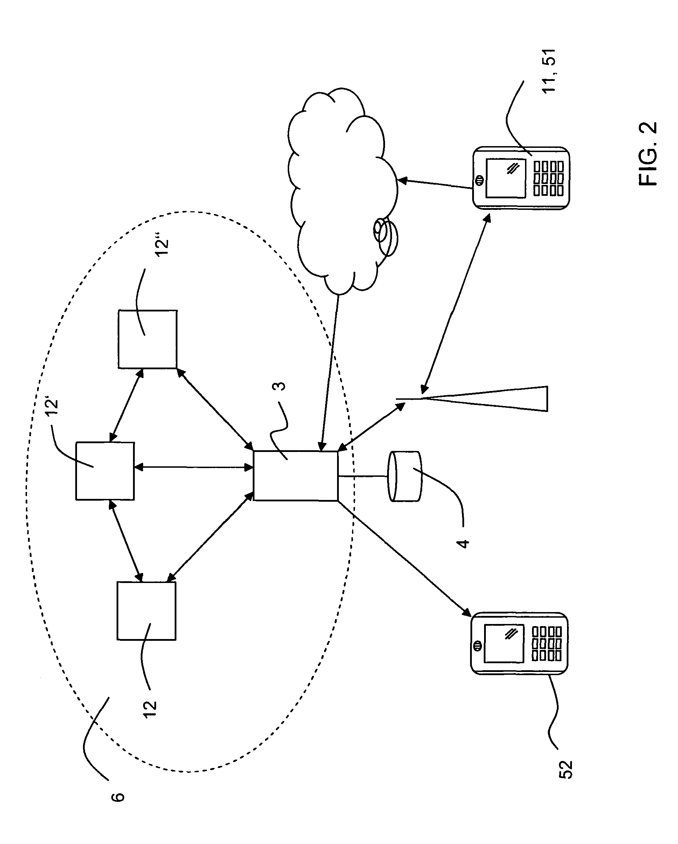

In Figure 2 in contrast, the requesting peer device 11 and the mobile terminal 51 of User A are the same device. In this set-up User A may issue an access request from his mobile terminal 51 as his peer device 11. This request will be received at the management unit 3. The transmission to the management unit 3 may be performed via the Internet or a mobile communications network. In this embodiment, the management unit 3 manages several devices 12, 12' and 12" of User B. The management unit 3 may be a server of a home network or a server on the Internet. Upon receipt of the access request, the management unit 3 will extract the SIM number of User A from the request. The SIM number will be used by the management unit 3 to look up the name and additional information on User A in database 4. With the thus retrieved information a permission request will be generated at the management unit 3. In addition, management unit 3 will determine the owner of the data, for which User A requested access. The information on the owner of the data can be used to determine the SIM of User B. The permission request will then be send to the mobile terminal 52 of User B. If User B approves the permission request, a respective signal will be retransmitted to management unit 3. Thereby the access from mobile terminal 51 to the device 12, 12', 12" where the requested data is stored will be provided.

If User B denies access, the management unit 3 will also receive a respective signal. Upon receipt of that signal, management unit 3 will generate and transmit a message to mobile terminal 51 of User A informing him of the rejection of his access request.

With the present invention it will thus be possible to support community communication such as intelligent semantic peer-to-peer webs for communities, including friends and family networks. It will in particular be possible to obtain information on the person trying to access your data. This is realized by positioning mobile terminals and the SIM of the users in the centre of peer-to-peer communication via the mobile and fixed Internet.

## Claims

1. Method for managing access to data on a personal network (6), wherein an access request is received at a managing unit (3) for the personal network (6) from a requesting device (11, 51) of a requesting party, **characterized in that** the access request includes information on the data to be accessed, the managing unit (3) extracts the subscriber identification module number of the requesting device (11, 51) as identification information of the requesting party from the access request, generates an indication of the requesting party based on the extracted identification information and transmits a permission request including the indication of the requesting party to a mobile terminal (52) associated to the owner of the data (2) which is to be accessed.

2. Method according to claim 1, **characterized in that** the managing unit (3) upon receipt of a response to the permission request initiates provisioning of the requested access to the requesting device (11, 51) and/or initiates transmission of a notification to a mobile terminal (51) which is linked to the extracted identification information.

3. Method according to claim 1 or 2, **characterized in that** the indication of the requesting party is determined based on the extracted identification information.

4. Method according to anyone of claims 1 to 3, **characterized in that** the managing unit (3) determines the owner of the data (2) on the personal network (6).

5. Method according to anyone of claims 1 to 4, **characterized in that** the provisioning of access to data (2) is transmission of the data (2) to the requesting device (11, 51).

6. Method according to anyone of claims 1 to 5, **characterized in that** the mobile terminal (52) of the owner of the data (2) is different from the device (12, 13) where the data (2) which is to be accessed is stored.

7. Management unit for managing the access to data on a personal network **characterized in that** the management unit (3) comprises a receiving unit for receiving an access request including information on the data to be accessed, an extraction unit for extracting the subscriber identification module number of the requesting device (11, 51) as identification information from the access request, a generating unit for generating an indication of the requesting party from the extracted identification information and a communication interface for transmitting a permission request including the indication of the requesting party to a mobile terminal (52) of the owner of the data (2) to be accessed.

8. Management unit according to claim 7, **characterized in that** it further comprises a connection to a database (4) for retrieving information related to identification indication.

9. Management unit according to anyone of claims 7 or 8, **characterized in that** it comprises a determination unit for determining the owner of the data (2) to which access is requested.

10. Management unit according to claim 7, **characterized in that** the management unit (3) is part of a personal network (6).

11. Management unit according to anyone of claims 7 to 9, **characterized in that** the management unit (3) is at least partially included in a connecting unit used for the connection between the requesting device (11, 51) and the personal network (6).

## Patentansprüche

1. Verfahren zum Verwalten des Zugriffs auf Daten auf einem persönlichen Netzwerk (6), wobei eine Zugriffsanfrage an einer Verwaltungseinheit (3) für das persönliche Netzwerk (6) von einem anfragenden Gerät (11, 51) einer anfragenden Partei empfangen wird, **dadurch gekennzeichnet, dass** die Zugriffsanfrage Informationen über die Daten, auf die zugegriffen werden soll, enthält, die Verwaltungseinheit (3) die Teilnehmer-Identifikationsmodul-Nummer des anfragenden Gerätes (11, 51) als Identifikationsinformation der anfragenden Partei aus der Zugriffsanfrage extrahiert, basierend auf der extrahierten Identifikationsinformation eine Angabe der anfragenden Partei erzeugt und eine Erlaubnisanfrage, die die Angabe der anfragenden Partei enthält, an ein mobiles Endgerät (52), das mit dem Inhaber der Daten (2), auf die zugegriffen werden soll, übermittelt.

2. Verfahren nach Anspruch 1, **dadurch gekennzeichnet, dass** die Verwaltungseinheit (3) bei Erhalt einer Antwort auf die Erlaubnisanfrage, das Bereitstellen des angefragten Zugriffs an das anfragende Gerät (11, 51) initiiert und/oder eine Übermittlung einer Benachrichtigung an ein mobiles Endgerät (51), das mit der extrahierten Identifikationsinformation verbunden ist, initiiert.

3. Verfahren nach einem der Ansprüche 1 oder 2, **dadurch gekennzeichnet, dass** die Angabe der anfragenden Partei basieren auf der extrahierten Identifikationsinformation bestimmt wird.

4. Verfahren nach einem der Ansprüche 1 bis 3, **dadurch gekennzeichnet, dass** die Verwaltungseinheit (3) den Inhaber der Daten (2) auf dem persönlichen Netzwerk (6) bestimmt.

5. Verfahren nach einem der Ansprüche 1 bis 4, **dadurch gekennzeichnet, dass** die Bereitstellung des Zugriffs auf Daten (2) eine Übermittlung der Daten (2) an das anfragende Gerät (11, 51) ist.

6. Verfahren nach einem der Ansprüche 1 bis 5, **dadurch gekennzeichnet, dass** das mobile Endgerät (52) des Inhabers der Daten (2) sich von dem Gerät (12, 13), wo die Daten (2), auf die zugegriffen werden soll, gespeichert sind, unterscheidet.

7. Verwaltungseinheit zur Verwaltung des Zugriffs auf Daten auf einem persönlichen Netzwerk, **dadurch gekennzeichnet, dass** die Verwaltungseinheit (3) eine Empfangseinheit zum Empfang einer Zugriffsanfrage, die Informationen über die Daten, auf die zugegriffen werden soll, umfasst, eine Extraktionseinheit zum Extrahieren der Teilnehmer-Identifikationsmodul-Nummer des anfragenden Gerätes (11, 51) als Identifikationsinformation aus der Zugriffsanfrage, eine Erzeugungseinheit zum Erzeugen einer Angabe der anfragenden Partei aus der extrahierten Identifikationsinformation und eine Kommunikationsschnittstelle zum Übertragen einer Erlaubnisanfrage, die die Angabe der anfragenden Partei enthält, an ein mobiles Endgerät (52) des Besitzers der Daten (2), auf die zugegriffen werden soll, umfasst.

8. Verwaltungseinheit nach Anspruch 7, **dadurch gekennzeichnet, dass** diese weiterhin eine Verbindung zu einer Datenbank (4) zum Abfragen von Informationen, die mit Identifikationsangaben in Beziehung stehen, umfasst.

9. Verwaltungseinheit nach einem der Ansprüche 7 oder 8, **dadurch gekennzeichnet, dass** diese eine Bestimmungseinheit zum Bestimmen des Besitzers der Daten (2), zu denen Zugriff angefragt wird, umfasst.

10. Verwaltungseinheit nach Anspruch 7, **dadurch gekennzeichnet, dass** die Verwaltungseinheit (3) Teil eines persönlichen Netzwerkes (6) ist.

11. Verwaltungseinheit nach einem der Ansprüche 7 bis 9, **dadurch gekennzeichnet, dass** die Verwaltungseinheit (3) zumindest teilweise in einer Verbindungseinheit, die für die Verbindung zwischen dem anfragenden Gerät (11, 51) und dem persönlichen Netzwerk (6) verwendet wird, enthalten ist.

## Revendications

1. Procédé de gestion d'accès à des données sur un réseau personnel (6), dans lequel une demande d'accès est reçue au niveau d'une unité de gestion (3) pour le réseau personnel (6) à partir d'un dispositif demandeur (11, 51) d'une partie requérante, **caractérisé en ce que** la demande d'accès comporte des informations sur les données à consulter, l'unité de gestion (3) extrait le numéro de module d'identification d'abonné du dispositif demandeur (11, 51) en tant qu'informations d'identification de la partie requérante à partir de la demande d'accès, produit une indication de la partie requérante sur la base des informations d'identification extraites et transmet une demande d'autorisation comportant l'indication de la partie requérante à un terminal mobile (52) associé au propriétaire des données (2) qui doivent être consultées.

2. Procédé selon la revendication 1, **caractérisé en ce que** l'unité de gestion (3), lors de la réception d'une réponse à la demande d'autorisation, initie la fourniture de l'accès demandé au dispositif demandeur (11, 51) et/ou initie la transmission d'une notification à un terminal mobile (51) qui est lié aux informations d'identification extraites.

3. Procédé selon la revendication 1 ou 2, **caractérisé en ce que** l'indication de la partie requérante est déterminée sur la base des informations d'identification extraites.

4. Procédé selon l'une quelconque des revendications 1 à 3, **caractérisé en ce que** l'unité de gestion (3) détermine le propriétaire des données (2) sur le réseau personnel (6).

5. Procédé selon l'une quelconque des revendications 1 à 4, **caractérisé en ce que** la fourniture d'un accès aux données (2) représente la transmission des données (2) au dispositif demandeur (11, 51).

6. Procédé selon l'une quelconque des revendications 1 à 5, **caractérisé en ce que** le terminal mobile (52) du propriétaire des données (2) est différent du dispositif (12, 13) dans lequel les données (2) qui doivent être consultées sont stockées.

7. Unité de gestion destinée à gérer l'accès à des données sur un réseau personnel **caractérisée en ce que** l'unité de gestion (3) comprend une unité de réception destinée à recevoir une demande d'accès comportant des informations sur les données à consulter, une unité d'extraction destinée à extraire le numéro de module d'identification d'abonné du dispositif demandeur (11, 51) sous la forme d'informations d'identification à partir de la demande d'accès, une unité de production destinée à produire une indication de la partie requérante à partir des informations d'identification extraites et une interface de communication destinée à transmettre une demande d'autorisation comportant l'indication de la partie requérante à un terminal mobile (52) du propriétaire des données (2) à consulter.

8. Unité de gestion selon la revendication 7, **caractérisée en ce qu'**elle comprend, en outre, une liaison à une base de données (4) afin d'assurer l'extraction d'informations associées à l'indication d'identification.

9. Unité de gestion selon l'une quelconque des revendications 7 ou 8, **caractérisée en ce qu'**elle comprend une unité de détermination destinée à déterminer le propriétaire des données (2) auxquelles l'accès est demandé.

10. Unité de gestion selon la revendication 7, **caractérisée en ce que** l'unité de gestion (3) fait partie d'un réseau personnel (6).

11. Unité de gestion selon l'une quelconque des revendications 7 à 9, **caractérisée en ce que** l'unité de gestion (3) est au moins partiellement contenue dans une unité de liaison utilisée afin d'assurer la liaison entre le dispositif demandeur (11, 51) et le réseau personnel (6).
